# EUROPÄISCHE PATENTSCHRIFT

(11) **EP 1 225 104 B1**
(45) Veröffentlichungstag und Bekanntmachung des Hinweises auf die Patenterteilung: **24.03.2004**
(21) Anmeldenummer: 02090006.4
(22) Anmeldetag: 10.01.2002
(51) Int. Cl.: B60R 22/03, B60R 22/46

(54) **Sicherheitsgurtvorrichtung**
Safety belt
Ceinture de sécurité

(30) Priorität: 11.01.2001 DE 10101044
(43) Veröffentlichungstag der Anmeldung: 24.07.2002
(73) Patentinhaber: TAKATA-PETRI (Ulm) GmbH, 89081 Ulm (DE)
(72) Erfinder: Kopetzky, Robert, Dr., 91207 Lauf - Simonshofen (DE)
(74) Vertreter: Rummler, Felix Dipl. Ing.

(56) Entgegenhaltungen:
- EP-A- 0 893 313
- WO-A-00/47454
- US-A- 5 607 118

## Beschreibung

Die Erfindung betrifft eine Sicherheitsgurtvorrichtung für Kraftfahrzeuge mit einem Sicherheitsgurt, einem Gurtaufroller und einem Antrieb für den Aufroller.

Derartige Sicherheitsgurtvorrichtungen sind grundsätzlich bekannt, beispielsweise aus der gattungsbildenden EP-A-893 313. Mittels des Antriebs kann beispielsweise eine Gurtstrafffunktion realisiert werden, indem bei einem Unfall der Aufroller in Aufwickelrichtung angetrieben wird, um dafür zu sorgen, daß der Gurt rechtzeitig eng am Körper des jeweiligen Fahrzeuginsassen anliegt.

Es ist eine Aufgabe der Erfindung, eine Sicherheitsgurtvorrichtung der eingangs genannten Art zu schaffen, die bei möglichst einfachem Aufbau und sicherer und zuverlässiger Funktionsweise möglichst vielseitig einsetzbar ist.

Die Lösung dieser Aufgabe erfolgt durch die Merkmale des Anspruchs 1 und insbesondere dadurch, daß ein Getriebe zwischen dem Antrieb und dem Aufroller sowie ein Schalter vorgesehen sind, wobei mit dem Schalter ausgehend von einem Freilaufmodus wenigstens eine Getriebekonfiguration einstellbar ist, die einem Komfortmodus mit in Abwickelrichtung angetriebenen Aufroller oder einem Straffermodus mit in Aufwickelrichtung angetriebenem Aufroller entspricht, und wobei der Schalter mittels des Antriebs betätigbar ist und zum Einstellen verschiedener Schalterstellungen eine Weiche für ein mittels des Antriebs bewegbares Schaltglied des Schalters umfaßt.

Die erfindungsgemäße Sicherheitsgurtvorrichtung kann in wenigstens zwei Betriebsmodi betrieben werden, und zwar in einem Freilaufmodus und in einem Antriebsmodus. Der Freilaufmodus ermöglicht eine normale Benutzung des Sicherheitsgurtes im Normalbetrieb des Fahrzeugs, in dem der Aufroller frei drehbar ist. Handelt es sich bei dem Antriebsmodus um den Komfortmodus, so sorgt der Antrieb für ein automatisches Abwickeln des Gurtes, um dem Fahrzeuginsassen das Ausziehen des Gurtes zu erleichtem oder zu Beginn des Fahrbetriebs den Gurt an den Fahrzeuginsassen heranzureichen. Wenn es sich bei dem Antriebsmodus dagegen um den Straffermodus handelt, dann wird der Gurt mittels des Antriebs auf dem Aufroller aufgewickelt, um z.B. eine Gurtstrafffunktion zu realisieren.

Durch die erfindungsgemäße Weiche kann der Verlauf einer Schaltbewegung des mittels des Antriebs bewegbaren Schaltgliedes vorgegeben werden. Auf diese Weise ist es möglich, das Schaltglied mittels des Antriebs in wenigstens zwei verschiedene Schalterstellungen zu bewegen, wobei die Schalterstellungen durch die Weiche vorgegeben sind.

Vorzugsweise sind ausgehend von dem Freilaufmodus verschiedene Getriebekonfigurationen einstellbar, von denen eine dem Komfortmodus und eine andere dem Straffermodus entspricht. In dieser bevorzugten Ausführung kann die Sicherheitsgurtvorrichtung somit in drei Betriebsmodi betrieben werden, wobei mittels des Antriebs wahlweise entweder der Komfortmodus oder der Straffermodus eingestellt werden kann.

Vorzugsweise können mittels des Antriebs verschiedene, von den Schalterstellungen abhängige Getriebekonfigurationen eingestellt werden.

Die den verschiedenen Schalterstellungen entsprechenden Getriebekonfigurationen können sich insbesondere hinsichtlich der resultierenden Drehrichtung des Aufrollers und/oder hinsichtlich des Übersetzungsverhältnisses des Getriebes voneinander unterscheiden.

In einer bevorzugten praktischen Ausgestaltung der Erfindung umfaßt die Weiche eine Kulissenführung für das Schaltglied. Bevorzugt ist es, wenn das Schaltglied in einer Schlitz- oder Langlochanordnung der Weiche zwangsgeführt ist.

In einer weiteren bevorzugten Ausführungsform der Erfindung sind durch von einer Verzweigung ausgehende Arme der Weiche verschiedene Schaltwege mit Endstellungen für das Schaltglied vorgegeben, in denen durch das Schaltglied verschiedene Getriebekonfigurationen eingestellt sind.

Auf diese Weise können durch die Weiche definierte Endstellungen für das Schaltglied vorgegeben werden, die jeweils einer definierten Getriebekonfiguration entsprechen.

Wenn gemäß einem weiteren bevorzugten Ausführungsbeispiel der Erfindung das Schaltglied gegen eine Rückstellkraft insbesondere einer Rückstellfeder bewegbar ist, dann kann mittels der Rückstellkraft dafür gesorgt werden, daß nach dem Ausschalten des Antriebs das Schaltglied automatische wieder zurück in eine dem Freilaufmodus entsprechende Freilaufstellung bewegt wird.

Des weiteren ist in einer bevorzugten Ausführungsform der Erfindung vorgesehen, daß an einer Verzweigung der Weiche ein bewegbares Stellglied angeordnet ist, durch dessen Stellung jeweils einer von mehreren Schaltwegen für das Schaltglied vorgegeben ist.

Die Stellung des Stellgliedes entscheidet somit über den Verlauf der Schaltbewegung des mittels des Antriebs bewegbaren Schaltgliedes.

Besonders bevorzugt ist es, wenn das Stellglied mittels des Schaltgliedes betätigbar ist. Hierdurch wird eine selbststeuernde Weiche geschaffen, bei der das mittels des Antriebs bewegte Schaltglied selbst für die jeweils gewünschte Weichenstellung sorgt und somit seinen Schaltweg selbst bestimmt.

Bevorzugt ist es, wenn die Stellung des Stellgliedes von der Größe einer über das Schaltglied auf das Stellglied aufgebrachten Kraft oder eines über das Schaltglied auf das Stellglied aufgebrachten Drehmoments abhängig ist.

Mittels des Antriebs kann hierbei das Schaltglied nicht nur in Bewegung versetzt werden, sondern durch die Art und Weise des Einwirkens auf das Schaltglied mittels des Antriebs kann außerdem über das Schaltglied die Stellung des Stellgliedes beeinflußt werden. Hierdurch wird eine kraftgesteuerte oder drehmomentgesteuerte Weiche für das Schaltglied geschaffen.

Gemäß einer besonders bevorzugten Ausführungsform der Erfindung ist ein Startmoment des Antriebs in eine Schaltbewegung des Schaltgliedes umsetzbar.

Hierbei ist es bevorzugt, wenn mittels des Antriebs auswählbare Schalterstellungen, insbesondere Stellungen eines Stellgliedes, von der Größe eines Startmoments des Antriebs abhängig sind. Wenn der Antrieb gemäß einer bevorzugten Variante einen Elektromotor umfaßt, dann sind die auswählbaren Stellungen des Schalters beziehungsweise des Stellgliedes insbesondere von der Größe eines Ansteuersignals für den Elektromotor abhängig, insbesondere von dem Verlauf eines Startimpulses des Ansteuersignals.

Gemäß einer weiter bevorzugten Ausführungsform der Erfindung ist vorgesehen, daß das Stellglied in einer Stellung einen Schaltweg für das Schaltglied vorgibt und zur Umlenkung des Schaltgliedes in einen anderen Schaltweg mittels des Schaltgliedes unter Überwindung eines Schaltwiderstandes in wenigstens eine weitere Stellung bewegbar ist.

Hierbei kann durch die Wahl der Größe des Schaltwiderstandes eine Bedingung vorgegeben werden, die erfüllt werden muß, damit das Schaltglied in den anderen Schaltweg umgelenkt werden kann.

Bevorzugt ist es, wenn das Stellglied in Form einer einseitig gehaltenen Biegefeder vorgesehen ist.

Die Biegefeder kann in den Fällen, in denen das Schaltglied den Schaltwiderstand der Biegefeder nicht überwinden kann, eine Führungsfläche für das Schaltglied bilden, die in einen vorgegebenen Schaltweg führt. Dabei kann die Biegefeder den Zugang zu einem oder mehreren weiteren Schaltwegen, die nur durch Überwinden des Schaltwiderstandes erreichbar sind, zumindest teilweise versperren.

Eine besonders bevorzugte praktische Ausgestaltung der Erfindung schlägt vor, daß das Schaltglied ein Bestandteil eines motorgetriebenen Riementriebs des Antriebs ist.

Mit einem derartigen Riementrieb können Kräfte auf das Schaltglied übertragen werden, die sowohl hinsichtlich der Richtung als auch des Betrags auf die Ausgestaltung der Weiche abgestimmt sind.

Insbesondere kann mittels eines Antriebsriemens das Schaltglied sowohl translatorisch bewegt als auch gedreht werden. Vorzugsweise ist das Schaltglied als ein mittels des Antriebsriemens translatorisch bewegbares und drehbares Antriebsrad ausgebildet.

Gemäß einer weiteren bevorzugten Ausführungsform der Erfindung ist nach Betätigung des Schalters das Schaltglied ein Bestandteil der kraftschlüssigen Verbindung zwischen dem Antrieb und dem Getriebe. Auf diese Weise kann mittels des Antriebs eine kraftschlüssige Verbindung zum Aufroller nicht nur hergestellt werden, sondern es kann durch entsprechende Betätigung des Schalters bzw. Weichenstellung für das Schaltglied eine gewünschte Getriebekonfiguration eingestellt werden.

Eine besonders bevorzugte praktische Ausgestaltung der Erfindung schlägt vor, daß das Schaltglied in Form eines Zahnrades oder Reibrades vorgesehen ist. Hierbei ist es bevorzugt, wenn das Getriebe ein Zahnradoder Reibradgetriebe umfaßt. Ferner ist vorzugsweise vorgesehen, daß in Abhängigkeit von der Schalterstellung, insbesondere von einer Endstellung des Schaltgliedes in einem Schaltweg, am Getriebe verschiedene Übersetzungsverhältnisse eingestellt sind, insbesondere entweder eine gerade oder eine ungerade Anzahl von Getrieberädern wirksam ist.

Auf diese Weise kann mittels des Antriebs nicht nur die Drehrichtung des Aufrollers, sondern mit dem gezielt einstellbaren Übersetzungsverhältnis auch die Drehgeschwindigkeit des Aufrollers vorgegeben werden.

Weitere bevorzugte Ausführungsformen sind auch in den Unteransprüchen, der Beschreibung sowie der Zeichnung angegeben.

Die Erfindung wird im folgenden beispielhaft unter Bezugnahme auf die Zeichnung beschrieben. Es zeigen:

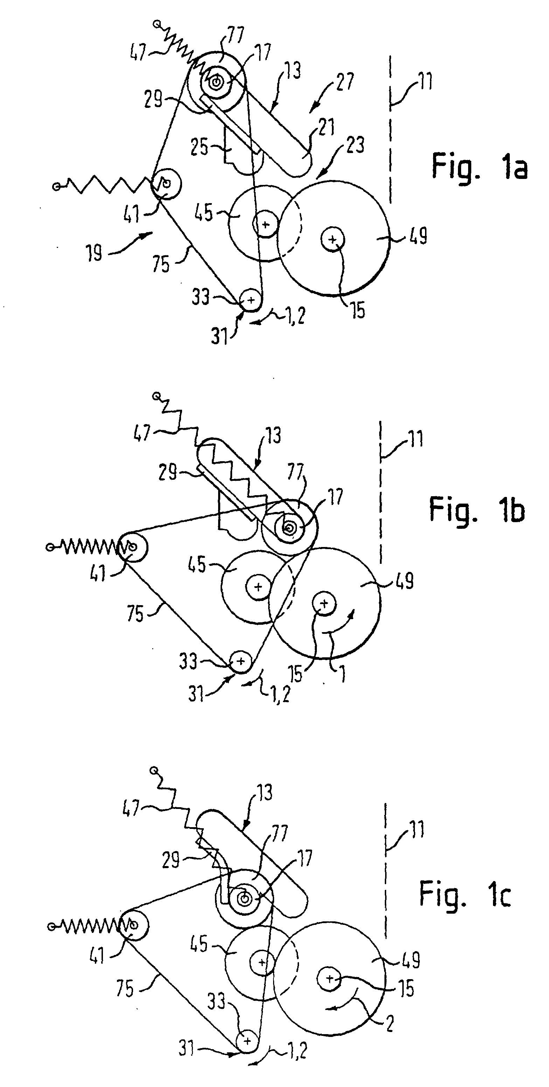

- Fig. 1a - 1c: verschiedene Betriebsmodi einer schematisch dargestellten Sicherheitsvorrichtung gemäß der Erfindung, und zwar einen Freilaufmodus (Fig. 1a), einen Komfortmodus (Fig. 1b) und einen Straffermodus (Fig. 1c).

Die in Fig. 1a - 1c dargestellte erfindungsgemäße Sicherheitsgurtvorrichtung umfaßt einen Antrieb 19, der von einem Elektromotor 31 mit einer Antriebswelle 33 und einem Riementrieb mit einem Antriebsriemen 75 und einer Riemenscheibe 77 gebildet ist. Der Antriebsriemen 75 ist vorzugsweise als Zahnriemen ausgebildet. Der Antriebsriemen 75 wird mittels einer federbelasteten Umlenkrolle 41 unter ständiger Spannung gehalten.

Die Riemenscheibe 77 dient gleichzeitig als eine Antriebsscheibe oder ein Antriebsrad, die bzw. das in nachstehend näher erläuterter Weise ausgehend von einer Freilaufstellung gemäß Fig. 1a in eine von mehreren Endoder Antriebsstellungen (vgl. Fig. 1b und 1c) bewegbar ist. In den Antriebsstellungen ist das Antriebsrad 77 Bestandteil eines Zahnradgetriebes 23, das zusätzlich zu dem Antriebsrad 77 zwei Getrieberäder 45, 49 umfaßt.

Das Antriebsrad 77 weist vorzugsweise zwei drehfest miteinander verbundene, axial beabstandete Eingriffsbereiche auf, von denen einer mit dem Zahnriemen 75 und der andere mit dem Getriebe 23 zusammenwirkt.

Das Getrieberad 45 ist drehfest mit einem Gurtaufroller 15 verbunden, von dem in Fig. 1a - 1c lediglich eine den Abtrieb des Getriebes 23 bildende Welle dargestellt ist. Grundsätzlich ist es erfindungsgemäß möglich, den Aufroller 15 selbst als Bestandteil des Getriebes 23 auszubilden. So könnte es sich beispielsweise bei dem Bauteil 49 in Fig. 1a - 1c um den an seinem Außenumfang mit einer entsprechenden Verzahnung versehenen Gurtaufroller handeln.

Mit dem Antriebsrad 77 drehfest verbunden ist ein scheiben- oder zylinderförmiges Schaltglied 17. Das Schaltglied 17 ist Bestandteil eines Schalters 27, der außerdem eine Weiche 13 mit zwei Schaltwegen 21, 29 und einem als Biegefeder ausgebildeten Stellglied 29 umfaßt. Die an einer Verzweigungsstelle der Weiche 13 angeordnete Biegefeder 29 ist einseitig gehalten und kann mittels des Schaltgliedes 17 aus der in Fig. 1a und 1b gezeigten Stellung in die Stellung gemäß Fig. 1c umgebogen werden, sofern das vom Schaltglied 17 auf die Biegefeder 29 ausgeübte Drehmoment ausreichend groß ist, um die erforderliche Biegekraft aufzubringen und dadurch einen Schaltwiderstand des Stellgliedes 29 zu überwinden.

Die Weiche 13 ist als Kulissenführung mit einer Schlitz- oder Langlochanordnung ausgebildet, in der das Antriebsrad 77 über das Schaltglied 17 zwangsgeführt ist. In der dargestellten Ausführungsform ist die Weiche 13 etwa Y-förmig ausgebildet, wobei im Freilaufmodus gemäß Fig. 1a das Schaltglied 17 am Y-Stamm angeordnet ist und durch die Y-Äste zwei mögliche Schaltwege 21, 25 für das Schaltglied 17 vorgegeben sind. Durch die Schaltwege 21, 25 sind außerdem zwei verschiedene, räumlich getrennte Endstellungen für das Schaltglied 17 vorgegeben, die zwei verschiedenen Getriebekonfigurationen entsprechen.

Im Freilaufmodus gemäß Fig. 1a bildet die Biegefeder 29 einen Teil der Begrenzung eines geradlinigen Schaltweges 21 und verschließt dadurch den Zugang zu dem anderen Schaltweg 25.

Im Freilaufmodus 1 a befindet sich das Antriebsrad 77 in einer Neutraloder Freilaufstellung, in welche das Antriebsrad 77 durch die Rückstellfeder 47 vorgespannt ist. In der Freilaufstellung befindet sich das Antriebsrad 77 außer Eingriff mit dem Getriebe 23, so daß der Aufroller 15 in beide Richtungen gegenüber dem Antrieb 19 frei drehbar ist.

Um ausgehend von dem Freilaufmodus den Komfortmodus einzustellen, wird der Elektromotor 31 eingeschaltet. Hierdurch wird das Antriebsrad 77 über den Antriebsriemen 75 nicht nur in Drehung versetzt, sondern außerdem entlang des durch die Weiche 13 vorgegebenen Weges gegen die Kraft der Rückstellfeder 47 in Richtung des Getriebes 23 bewegt.

Sobald das Schaltglied 17 die an der Verzweigungsstelle der Weiche 13 angeordnete Biegefeder 29 erreicht, wird auf die Biegefeder 29 ein Drehmoment ausgeübt, das versucht, die Biegefeder 29 umzubiegen. Das Startmoment des Elektromotors 31 ist derart gewählt, daß zum Einstellen des Komfortmodus das Drehmoment nicht ausreicht, um den Schaltwiderstand der Biegefeder 29 zu überwinden.

Durch die Wahl der geometrischen Verhältnisse in Abhängigkeit von der Größe des Schaltwiderstands der Biegefeder 29 ist dafür gesorgt, daß die Kraft, die über den Antriebsriemen 75 des Antriebs 19 auf das an der Verzweigung befindliche Schaltglied 17 aufgebracht wird, sowohl eine in den einen Schaltweg 21 führende Komponente als auch eine in den anderen Schaltweg 25 führende Komponente aufweist. Durch die Größe des Startmoments des Elektromotors 31 kann festgelegt werden, ob die zur Umlenkung des Schaltgliedes 17 erforderliche Kraftkomponente, die etwa entlang einer gedachten Verbindungsachse zwischen der Antriebswelle 33 des Motors 31 und der gemeinsamen Drehachse des Antriebsrades 77 und des Schaltgliedes 17 verläuft, ausreichend groß ist, um den Schaltwiderstand der Biegefeder 29 zu überwinden.

Zur Einstellung des Komfortmodus ist das Startmoment des Motors 31 derart ausgelegt, daß die Biegefeder 29 nicht mittels des Schaltgliedes 17 umgebogen werden kann, so daß das Schaltglied 17 aufgrund der anderen Kraftkomponente weiter entlang des geradlinigen Schaltweges 21 geführt wird, bis es die in Fig. 1b gezeigte Endstellung erreicht.

In der dem Komfortmodus entsprechenden Endstellung gemäß Fig. 1b kämmt das Antriebsrad 77 direkt mit dem drehfest mit dem Aufroller 15 gekoppelten Getrieberad 49. Der Aufroller 15 wird folglich gegensinnig zur Antriebswelle 33 in Drehung versetzt. Das Übersetzungsverhältnis des Getriebes 23, von dem das in der Endstellung befindliche Antriebsrad 77 nunmehr ein Bestandteil ist, wird zum einen durch das Übersetzungsverhältnis des Riementriebs und zum anderen durch das Verhältnis der Verzahnungen des Antriebsrades 77 und des Getrieberades 49 bestimmt.

Um ausgehend von dem Freilaufmodus gemäß Fig. 1a in den in Fig. 1c gezeigten Straffermodus zu schalten, wird das Startmoment des Motors 31 derart ausgelegt, daß bei an der Verzweigungsstelle der Weiche 13 befindlichem Schaltglied 17 das auf die Biegefeder 29 über den Antriebsriemen 75 und das Schaltglied 17 aufgebrachte Drehmoment ausreichend groß ist, um den Schaltwiderstand zu überwinden und die Biegefeder 29 umzubiegen. Die in den nunmehr freigegebenen Schaltweg 25 führende Kraftkomponente der auf das Antriebsrad 77 einwirkenden Kraft sorgt für die Umlenkung des Schaltgliedes 17 in den Schaltweg 25, bis die entsprechende Endstellung gemäß Fig. 1c erreicht ist.

In der dem Straffermodus entsprechenden Endstellung gemäß Fig. 1c kämmt das Antriebsrad 77 mit dem anderen Getrieberad 45. Anders als im Komfortmodus gemäß Fig. 1b ist nunmehr zwischen das Antriebsrad 77 und den Aufroller 15 ein weiteres Getrieberad 45 geschaltet, so daß der Aufroller 15 in einer der Drehrichtung der Antriebswelle 33 entsprechenden Drehrichtung angetrieben wird.

Auf diese Weise kann bei gleicher Drehrichtung der Antriebswelle 33 wahlweise der Sicherheitsgurt 11 im Komfortmodus abgewickelt oder im Straffermodus aufgewickelt werden. Das Übersetzungsverhältnis kann durch entsprechende Auslegung der das Getriebe 23 bildenden Zahnräder 45, 49 sowie des Antriebsrades 77 auf grundsätzlich jeden beliebigen Wert eingestellt werden.

In der in den Fig. 1a - 1c dargestellten Ausführungsform wird das Getriebe 23 im Komfortmodus von einer geraden Anzahl von Getrieberädern 77, 49 gebildet, während im Straffermodus das Getriebe 23 eine ungerade Anzahl von Getrieberädern 77, 75, 49 umfaßt.

Die während der Schaltbewegung des Antriebsrades 77 bzw. des Schaltgliedes 17 durch die Änderung des Abstands zwischen dem Antriebsrad 77 und der Antriebswelle 33 frei werdende Riemenlänge wird durch die federbelastete Umlenkrolle 41 aufgenommen.

Das Startmoment des Motors 31 kann durch entsprechende Auslegung des an den Elektromotor 31 angelegten Ansteuersignals in grundsätzlich beliebiger Weise vorgegeben werden. So kann z.B. der Verlauf eines Startimpulses eines Ansteuersignals des Antriebs 19 bzw. des Elektromotors 31 jeweils derart ausgelegt werden, daß der Schaltwiderstand des Stellgliedes 29 von dem Schaltglied 17 überwunden wird oder nicht.

### Bezugszeichenliste

- 1: Abwickelrichtung
- 2: Aufwickelrichtung
- 11: Sicherheitsgurt
- 13: Weiche
- 15: Gurtaufroller
- 17: Schaltglied
- 19: Antrieb
- 21: Schaltweg für Komfortmodus
- 23: Getriebe
- 25: Schaltweg für Straffermodus
- 27: Schalter
- 29: Stellglied, Biegefeder
- 31: Elektromotor
- 33: Antriebswelle
- 41: Umlenkrolle
- 45: Getrieberad, Zahnrad
- 47: Rückstellfeder
- 49: Getrieberad, Zahnrad
- 75: Antriebsriemen
- 77: Riemenscheibe, Antriebsrad

## Patentansprüche

1. Sicherheitsgurtvorrichtung für Kraftfahrzeuge mit
- einem Sicherheitsgurt (11),
- einem Gurtaufroller (15),
- einem Antrieb (19) für den Aufroller (15),
- einem Getriebe (23) zwischen dem Antrieb (19) und dem Aufroller (15) und
- einem Schalter (27),
wobei mit dem Schalter (27) ausgehend von einem Freilaufmodus wenigstens eine Getriebekonfiguration einstellbar ist,
**dadurch gekennzeichnet**
**dass** die Getriebekonfiguration einem Komfortmodus mit in Abwickelrichtung (1) angetriebenem Aufroller (15) oder einem Straffermodus mit in Aufwickelrichtung (2) angetriebenem Aufroller (15) entspricht, wobei der Schalter (27) mittels des Antriebs (19) betätigbar ist und zum Einstellen verschiedener Schalterstellungen eine Weiche (13) für ein mittels des Antriebs (19) bewegbares Schaltglied (17) des Schalters (27) umfasst.

2. Vorrichtung nach Anspruch 1,
**dadurch gekennzeichnet,**
**dass** die Weiche (13) eine Kulissenführung (21, 25) für das Schaltglied (17) umfasst.

3. Vorrichtung nach Anspruch 1 oder 2,
**dadurch gekennzeichnet,**
**daß** das Schaltglied (17) in einer Schlitz- oder Langlochanordnung (21, 25) der Weiche (13) zwangsgeführt ist.

4. Vorrichtung nach einem der vorhergehenden Ansprüche,
**dadurch gekennzeichnet,**
**daß** das Schaltglied (17) gegen eine Rückstellkraft insbesondere einer Rückstellfeder (47) bewegbar ist.

5. Vorrichtung nach einem der vorhergehenden Ansprüche,
**dadurch gekennzeichnet,**
**daß** durch von einer Verzweigung ausgehende Arme der Weiche (13) verschiedene Schaltwege (21, 25) mit Endstellungen für das Schaltglied (17) vorgegeben sind, in denen durch das Schaltglied (17) verschiedene Getriebekonfigurationen eingestellt sind.

6. Vorrichtung nach einem der vorhergehenden Ansprüche,
**dadurch gekennzeichnet,**
**daß** das Schaltglied (17) während des Komfortmodus und des Straffermodus mittels des Antriebs (19) in einer entsprechenden Schalterstellung, insbesondere in einer Endstellung in einem Schaltweg (21, 25), gehalten ist.

7. Vorrichtung nach einem der vorhergehenden Ansprüche,
**dadurch gekennzeichnet,**
**daß** an einer Verzweigung der Weiche (13) ein bewegbares Stellglied (29) angeordnet ist, durch dessen Stellung jeweils einer von mehreren Schaltwegen (21, 25) für das Schaltglied (17) vorgegeben ist.

8. Vorrichtung nach einem der vorhergehenden Ansprüche,
**dadurch gekennzeichnet,**
**daß** ein Stellglied (29) mittels des Schaltgliedes (17) betätigbar ist.

9. Vorrichtung nach einem der vorhergehenden Ansprüche,
**dadurch gekennzeichnet,**
**daß** eine im Bereich einer Verzweigung der Weiche (13) auf das Schaltglied (17) mittels des Antriebs (19) aufgebrachte Kraft mehrere jeweils in einen Schaltweg (21, 25) führende Komponenten aufweist.

10. Vorrichtung nach einem der vorhergehenden Ansprüche,
**dadurch gekennzeichnet,**
**daß** die Stellung eines Stellgliedes (29) von der Größe einer über das bewegte Schaltglied (17) auf das Stellglied (29) aufgebrachten Kraft oder eines über das Schaltglied (17) auf das Stellglied (29) aufgebrachten Drehmoments abhängig ist.

11. Vorrichtung nach einem der vorhergehenden Ansprüche,
**dadurch gekennzeichnet,**
**daß** ein Startmoment des Antriebs (19) in eine Schaltbewegung des Schaltgliedes (17) umsetzbar ist.

12. Vorrichtung nach einem der vorhergehenden Ansprüche,
**dadurch gekennzeichnet,**
**daß** mittels des Antriebs (19) auswählbare Schalterstellungen, insbesondere Stellungen eines Stellgliedes (29), von der Größe eines Startmoments des Antriebs (19), insbesondere von dem Verlauf eines Ansteuersignals für einen Elektromotor (31) des Antriebs (19), abhängig sind, vorzugsweise von dem Verlauf eines Startimpulses des Ansteuersignals.

13. Vorrichtung nach einem der vorhergehenden Ansprüche,
**dadurch gekennzeichnet,**
**daß** ein Stellglied (29) in einer Stellung einen Schaltweg (25) für das Schaltglied (17) vorgibt und zur Umlenkung des Schaltgliedes (17) in einen anderen Schaltweg (21) mittels des Schaltgliedes (17) unter Überwindung eines Schaltwiderstandes in wenigstens eine weitere Stellung bewegbar ist.

14. Vorrichtung nach einem der vorhergehenden Ansprüche,
**dadurch gekennzeichnet,**
**daß** ein Stellglied in Form einer einseitig gehaltenen Biegefeder (29) vorgesehen ist.

15. Vorrichtung nach einem der vorhergehenden Ansprüche,
**dadurch gekennzeichnet,**
**daß** das Schaltglied (17) ein Bestandteil eines motorgetriebenen Riementriebs (75, 77) des Antriebs (19) ist.

16. Vorrichtung nach einem der vorhergehenden Ansprüche,
**dadurch gekennzeichnet,**
**daß** ein Antriebsriemen (75) des Antriebs (19) ständig gespannt ist, insbesondere mittels einer federbelasteten Umlenkrolle (41).

17. Vorrichtung nach einem der vorhergehenden Ansprüche,
**dadurch gekennzeichnet,**
**daß** das Schaltglied (17) ein mittels eines Antriebsriemens (75) translatorisch bewegbares und drehbares Antriebsrad (77) umfaßt.

18. Vorrichtung nach einem der vorhergehenden Ansprüche,
**dadurch gekennzeichnet,**
**daß** nach Betätigung des Schalters (27) das Schaltglied (17) ein Bestandteil der kraftschlüssigen Verbindung zwischen dem Antrieb (19) und dem Getriebe (23) ist.

19. Vorrichtung nach einer der vorhergehenden Ansprüche,
**dadurch gekennzeichnet,**
**daß** das Schaltglied (17) ein Zahnrad oder Reibrad umfaßt.

20. Vorrichtung nach einem der vorhergehenden Ansprüche,
**dadurch gekennzeichnet,**
**daß** das Getriebe (23) ein Zahnrad- oder Reibradgetriebe umfaßt.

21. Vorrichtung nach einem der vorhergehenden Ansprüche,
**dadurch gekennzeichnet,**
**daß** nach Betätigung des Schalters (27) in Abhängigkeit von der Schalterstellung, insbesondere von einer Endstellung des Schaltgliedes (17) in einem Schaltweg (21, 25), am Getriebe (23) verschiedene Übersetzungsverhältnisse eingestellt sind, vorzugsweise entweder eine gerade oder eine ungerade Anzahl von Getrieberädern (45, 46) wirksam ist.

## Claims

1. Safety belt device for motor vehicles, having
- a safety belt (11),
- a belt retractor (15),
- a drive (19) for the retractor (15),
- a transmission mechanism (23) between the drive (19) and the retractor (15), and
- a switch (27),
it being possible, starting from a free-running mode, to set at least one transmission mechanism configuration using the switch (27),
**characterized**
**in that** the transmission mechanism configuration corresponds to a comfort mode with the retractor (15) driven in the unwinding direction (1) or a tightening mode with the retractor (15) driven in the winding-up direction (2), and the switch (27) can be actuated by means of the drive (19) and, in order to set different switch positions, comprises a points mechanism (13) for a switching member (17), which can be moved by means of the drive (19), of the switch (27).

2. Device according to Claim 1, **characterized in that** the points mechanism (13) comprises a slotted guide (21, 25) for the switching member (17).

3. Device according to Claim 1 or 2, **characterized in that** the switching member (17) is forcibly guided in a slit or slot arrangement (21, 25) of the points mechanism (13).

4. Device according to one of the preceding claims, **characterized in that** the switching member (17) can be moved counter to a restoring force in particular of a restoring spring (47).

5. Device according to one of the preceding claims, **characterized in that** different switching paths (21, 25) with limit positions for the switching member (17), in which different transmission mechanism configurations are set by the switching member (17), are predetermined by arms of the points mechanism (13) which lead from a branch point.

6. Device according to one of the preceding claims, **characterized in that** the switching member (17) is held in a suitable switch position, in particular in a limit position in a switching path (21, 25), by the drive (19) during the comfort mode and the tightening mode.

7. Device according to one of the preceding claims, **characterized in that** a movable actuator (29), the position of which predetermines in each case one of a plurality of switching paths (21, 25) for the switching member (17), is arranged at a branch point of the points mechanism (13).

8. Device according to one of the preceding claims, **characterized in that** an actuator (29) can be actuated by means of the switching member (17).

9. Device according to one of the preceding claims, **characterized in that** a force which is applied to the switching member (17) by means of the drive (19) in the region of a branch point of the points mechanism (13) has a plurality of components each guiding it into one switching path (21, 25).

10. Device according to one of the preceding claims, **characterized in that** the position of an actuator (29) is dependent on the level of a force applied to the actuator (29) via the moving switching element (17) or on a torque applied to the actuator (29) via the switching member (17).

11. Device according to one of the preceding claims, **characterized in that** a starting moment of the drive (19) can be converted into a switching movement of the switching member (17).

12. Device according to one of the preceding claims, **characterized in that** switch positions which can be selected by means of the drive (19), in particular positions of an actuator (29), are dependent on the level of a starting moment of the drive (19), in particular on the profile of a driving signal for an electric motor (31) of the drive (19), preferably on the profile of a starting pulse of the driving signal.

13. Device according to one of the preceding claims, **characterized in that** an actuator (29), in one position, predetermines a switching path (25) for the switching member (17) and can be moved into at least one further position, by means of the switching member (17), by overcoming a switching resistance, in order for the switching member (17) to be diverted into another switching path (21).

14. Device according to one of the preceding claims, **characterized in that** there is an actuator in the form of a bending spring (29) held on one side.

15. Device according to one of the preceding claims, **characterized in that** the switching member (17) is part of a motor-driven belt drive (75, 77) of the drive (19).

16. Device according to one of the preceding claims, **characterized in that** a drive belt (75) of the drive (19) is constantly tensioned, in particular by means of a spring-loaded guide roll (41).

17. Device according to one of the preceding claims, **characterized in that** the switching member (17) comprises a drive wheel (77) which can be rotated and moved in translation by means of a drive belt (75).

18. Device according to one of the preceding claims, **characterized in that** after the switch (27) has been actuated, the switching member (17) is part of the nonpositive connection between the drive (19) and the transmission mechanism (23).

19. Device according to one of the preceding claims, **characterized in that** the switching member (17) comprises a toothed wheel or a friction wheel.

20. Device according to one of the preceding claims, **characterized in that** the transmission mechanism (23) comprises a toothed-wheel or friction-wheel transmission mechanism.

21. Device according to one of the preceding claims, **characterized in that** after the switch (27) has been actuated, depending on the switch position, in particular on a limit position of the switching member (17) in a switching path (21, 25), different transmission ratios are set at the transmission mechanism (23), preferably either an even number or an odd number of transmission-mechanism wheels (45, 46) is active.

## Revendications

1. Ensemble de ceinture de sécurité pour véhicule automobile, comportant
- une ceinture de sécurité (11),
- un enrouleur de ceinture (15),
- un entraînement (19) pour l'enrouleur (15),
- un mécanisme de transmission (23) entre l'entraînement (19) et l'enrouleur (15), et
- un commutateur (27),
dans lequel au moins une configuration du mécanisme de transmission peut être établie en partant d'un mode à roue libre au moyen du commutateur (27),
**caractérisé en ce que** la configuration du mécanisme de transmission correspond à un mode de confort dans lequel l'enrouleur (15) est entraîné en direction de déroulement (1) ou à un mode tendeur dans lequel l'enrouleur (15) est entraîné en direction d'enroulement (2), et **en ce que** le commutateur (27) est actionnable au moyen de l'entraînement (19) et comprend un aiguillage (13) pour un organe de commutation (17), mobile au moyen de l'entraînement (19), du commutateur (27) pour établir des positions différentes du commutateur.

2. Ensemble selon la revendication 1, **caractérisé en ce que** l'aiguillage (13) comprend un guidage à coulisse (21, 25) pour l'organe de commutation (17).

3. Ensemble selon la revendication 1 ou 2, **caractérisé en ce que** l'organe de commutation (17) est guidé à force dans un agencement à fente ou à trou oblong (21, 25) de l'aiguillage (13).

4. Ensemble selon l'une des revendications précédentes, **caractérisé en ce que** l'organe de commutation (17) est mobile à l'encontre d'une force de rappel, en particulier à l'encontre d'un ressort de rappel (47).

5. Ensemble selon l'une des revendications précédentes, **caractérisé en ce que** des voies de commutation différentes (21, 25) présentant des positions terminales pour l'organe de commutation (17) sont prédéterminées par des bras de l'aiguillage (13) qui partent d'une ramification, positions dans lesquelles des configurations différentes du mécanisme de transmission sont établies par l'organe de commutation (17).

6. Ensemble selon l'une des revendications précédentes, **caractérisé en ce que** pendant le mode de confort et pendant le mode tendeur, l'organe de commutation (17) est retenu dans une position de commutation correspondante, en particulier dans une position terminale dans une voie de commutation (21, 25) au moyen de l'entraînement (19).

7. Ensemble selon l'une des revendications précédentes, **caractérisé en ce qu'**un organe de positionnement mobile (29) est agencé sur une ramification de l'aiguillage (13), organe dont la position détermine une voie respective parmi plusieurs voies de commutation (21, 25) pour l'organe de commutation (17).

8. Ensemble selon l'une des revendications précédentes, **caractérisé en ce qu'**un organe de positionnement (29) est actionnable au moyen de l'organe de commutation (17).

9. Ensemble selon l'une des revendications précédentes, **caractérisé en ce qu'**une force appliquée sur l'organe de commutation (17) au moyen de l'entraînement (19) dans la zone d'une ramification de l'aiguillage (13) présente plusieurs composantes menant chacune dans une voie de commutation (21, 25).

10. Ensemble selon l'une des revendications précédentes, **caractérisé en ce que** la position d'un organe de positionnement (29) dépend de la taille d'une force appliquée sur l'organe de positionnement (29) via l'organe de commutation mobile (17), ou bien d'un couple de rotation appliqué sur l'organe de positionnement (29) via l'organe de commutation (17).

11. Ensemble selon l'une des revendications précédentes, **caractérisé en ce qu'**un couple de démarrage de l'entraînement (19) est convertissable en un mouvement de commutation de l'organe de commutation (17).

12. Ensemble selon l'une des revendications précédentes, **caractérisé en ce que** des positions du commutateur sélectionnables au moyen de l'entraînement (19), en particulier des positions d'un organe de positionnement (29) dépendent de la taille d'un couple de démarrage de l'entraînement (19), en particulier de l'allure d'un signal de pilotage pour un moteur électrique (31) de l'entraînement (19), de préférence de l'allure d'une impulsion de démarrage du signal de pilotage.

13. Ensemble selon l'une des revendications précédentes, **caractérisé en ce que** dans une position un organe de positionnement (29) définit une voie de commutation (25) pour l'organe de commutation (17) et est mobile jusque dans au moins une autre position au moyen de l'organe de commutation (17), en surmontant une résistance de commutation, pour renvoyer l'organe de commutation (17) dans une autre voie de commutation (21).

14. Ensemble selon l'une des revendications précédentes, **caractérisé en ce qu'**il est prévu un organe de positionnement sous la forme d'un ressort de flexion (29) retenu sur un côté.

15. Ensemble selon l'une des revendications précédentes, **caractérisé en ce que** l'organe de commutation (17) fait partie d'une commande à courroie motorisée (75, 77) de l'entraînement (19).

16. Ensemble selon l'une des revendications précédentes, **caractérisé en ce qu'**une courroie d'entraînement (75) de l'entraînement (19) est tendue en permanence, en particulier au moyen d'un galet de renvoi (41) chargé par un ressort.

17. Ensemble selon l'une des revendications précédentes, **caractérisé en ce que** l'organe de commutation (17) comprend une roue d'entraînement (77) mobile en translation et en rotation au moyen d'une courroie d'entraînement (75).

18. Ensemble selon l'une des revendications précédentes, **caractérisé en ce qu'**après actionnement du commutateur (27), l'organe de commutation (17) fait partie de la liaison en coopération de forces entre l'entraînement (19) et le mécanisme de transmission (23).

19. Ensemble selon l'une des revendications précédentes, **caractérisé en ce que** l'organe de commutation (17) comprend une roue dentée ou une roue à friction.

20. Ensemble selon l'une des revendications précédentes, **caractérisé en ce que** le mécanisme de transmission (23) comprend un mécanisme à roue dentée ou à roue à friction.

21. Ensemble selon l'une des revendications précédentes, **caractérisé en ce qu'**après actionnement du commutateur (27), des rapports de transmission différents sont établis au niveau du mécanisme de transmission (23) en fonction de la position du commutateur, en particulier d'une position terminale de l'organe de commutation (17) dans une voie de commutation (21, 25), rapports dans lesquels agit de préférence soit un nombre pair soit un nombre impair de roues de transmission (45, 46).
